# EUROPÄISCHE PATENTSCHRIFT

(11) **EP 3 293 476 B1**
(45) Veröffentlichungstag und Bekanntmachung des Hinweises auf die Patenterteilung: **09.10.2019**
(21) Anmeldenummer: 17175925.1
(22) Anmeldetag: 14.06.2017
(51) Int. Cl.: F28F 1/40, F15D 1/00, F28F 13/02, F28F 13/18

(54) **ROHR UND VERFAHREN ZUM TRANSPORT VON FLUIDEN**
PIPE AND METHOD FOR CONVEYING FLUIDS
TUBE ET PROCÉDÉ DE TRANSPORT DE FLUIDES

(30) Priorität: 08.09.2016 AT 4142016
(43) Veröffentlichungstag der Anmeldung: 14.03.2018
(73) Patentinhaber: Jansen AG, 9463 Oberriet (CH)
(72) Erfinder: Alge, Dietmar, 6890 Lustenau (AT)
(74) Vertreter: Fechner, Thomas

(56) Entgegenhaltungen:
- EP-A1- 1 857 722
- JP-A- H11 190 471
- JP-A- 2000 097 211
- US-A1- 2012 025 025

## Beschreibung

Die vorliegende Erfindung betrifft ein Rohr zum Transport von Fluiden, insbesondere Flüssigkeiten, in einem Transporthohlraum des Rohres, welcher von einer Rohrwandung des Rohres umgeben ist, wobei die Rohrwandung an ihrer den Transporthohlraum begrenzenden Innenoberfläche eine Abfolge von voneinander beabstandeten Rippen aufweist, wobei zwischen zwei benachbart zueinander angeordneten Rippen jeweils eine Vertiefung angeordnet ist und die Rippen weiter in den Transporthohlraum hineinragen als die Vertiefungen.

Zusätzlich betrifft die Erfindung auch ein Verfahren zum Transport von Fluiden, insbesondere Flüssigkeiten, in einem Transporthohlraum eines solchen Rohres und/oder eine entsprechende Verwendung solcher Rohre.

Die WO 2009/045153 A1 hat sich zum Ziel gesetzt, bei Rohren für eine geothermische Anwendung die Absorption von Energie bzw. Wärme zu verbessern. Sie schlägt hierzu ein gattungsgemäßes Rohr vor und geht davon aus, dass durch die Rippen und Vertiefungen der Innenoberfläche der Rohrwandung eine turbulente Strömung erzeugt wird, welche die Energieaufnahme in dem den Transporthohlraum des Rohres durchströmenden Fluid verbessert.

EP 1 857722 A1 und JP 2000 097211 A offenbaren Rohre gemäss dem Oberbegriff des Patentanspruchs 1.

Aufgabe der vorliegenden Erfindung ist es hingegen, ein Rohr der oben genannten Art dahingehend zu verbessern, dass Fluide, insbesondere Flüssigkeiten, mit einer möglichst geringen Pumpenleistung durch den Transporthohlraum hindurchtransportiert werden können.

Zur Lösung dieser Aufgabe ist bei einem Rohr der oben genannten Art erfindungsgemäß vorgesehen, dass die Rippen in Richtung in den Transporthohlraum hinein, in einem Querschnitt durch das Rohr orthogonal zu einer Längserstreckungsrichtung des Rohres gesehen, zumindest bereichsweise verjüngt ausgebildet sind, und dass die Rippen und die Vertiefungen eine zumindest bereichsweise abgerundete Aussenkontur aufweisen.

In anderen Worten sieht die Erfindung vor, dass die Querschnittsfläche einer jeweiligen Rippe, in dem genannten Querschnitt gesehen, in Richtung in den Transporthohlraum hinein zumindest bereichsweise abnimmt. Besonders günstig ist es in diesem Zusammenhang, wenn die Vertiefungen in Richtung aus dem Transporthohlraum heraus, in dem Querschnitt durch das Rohr orthogonal zu der Längserstreckungsrichtung des Rohres gesehen, zumindest bereichsweise verjüngt ausgebildet sind. In dieser bevorzugten Ausführungsform ist somit günstigerweise vorgesehen, dass die Querschnittsfläche einer jeweiligen Vertiefung, in dem genannten Querschnitt gesehen, in Richtung nach außen, also in Richtung aus dem Transporthohlraum heraus, zumindest bereichsweise abnimmt. Bei einer Rippe könnte man auch von einem in Richtung in den Transporthohlraum hinein gerichteten Vorsprung der Innenoberfläche sprechen. Eine Vertiefung könnte man entsprechend als eine nach außen, also in Richtung aus dem Transporthohlraum hinaus, gerichtete Ausnehmung bezeichnen. Vereinfacht gesprochen könnte man Rippen auch als Berge und Vertiefungen auch als dazwischen angeordnete Täler oder Kanäle bezeichnen.

Bevorzugte Ausgestaltungsformen erfindungsgemäßer Rohre sehen vor, dass diese, abgesehen von den Rippen und Vertiefungen, einen, orthogonal zur Längserstreckungsrichtung des Rohres gesehen, kreisrunden Querschnitt des Transporthohlraums aufweisen. In diesem Fall sind die Richtungen in den Transporthohlraum hinein radial nach innen zum Zentrum des Transporthohlraums gerichtet. Die Richtungen aus dem Transporthohlraum heraus weisen in diesem Fall radial vom Zentrum des Transporthohlraums nach außen.

Der Vollständigkeit halber wird aber darauf hingewiesen, dass der Transporthohlraum der erfindungsgemäßen Rohre nicht zwangsläufig einen, abgesehen von den Rippen und Vertiefungen, kreisrunden Querschnitt aufweisen muss. Es sind auch andere Querschnittsgrundformen des Transporthohlraums wie z.B. Rechtecke, Quadrate, Ellipsen und dergleichen denkbar.

Der Erfindung liegt jedenfalls die Erkenntnis zugrunde, dass überraschenderweise durch eine zumindest bereichsweise Verjüngung der Rippen, in Richtung in den Transporthohlraum hinein, und damit durch eine bestimmte Art der Formgebung der Rippen der Strömungswiderstand im Transporthohlraum des Rohres deutlich herabgesetzt werden kann. Durch die Erfindung gibt es beim Transport von Fluiden, wie insbesondere Flüssigkeiten, durch den Transporthohlraum hindurch weniger Reibungsverluste bzw. einen relativ geringen Strömungswiderstand, wodurch, wenn das Fluid, insbesondere die Flüssigkeit, durch den Transporthohlraum hindurchgepumpt werden muss, auch eine geringere Pumpenleistung notwendig ist. Besonders günstig ist es im Sinne eines möglichst geringen Strömungswiderstandes, wenn die Rippen und Vertiefungen, vorzugsweise vollständig, in der Längserstreckungsrichtung des Rohres ausgerichtet sind. In anderen Worten ist in diesen bevorzugten Ausgestaltungsformen vorgesehen, dass die Rippen und Vertiefungen selbst längserstreckt sind, wobei die Richtungen der Längserstreckung der Rippen und Vertiefungen, vorzugsweise exakt, parallel zur Längserstreckungsrichtung des Rohres, also zur Richtung der Längserstreckung des Rohres verlaufen. Die Längserstreckungsrichtung des Rohres könnte auch als Transportrichtung bezeichnet werden. In dieser Transportrichtung bzw. Längserstreckungsrichtung werden die Fluide, insbesondere Flüssigkeiten, durch den Transporthohlraum des Rohres hindurch transportiert.

Bevorzugt ist vorgesehen, dass sich die Form der Rippen und/oder Vertiefungen in Längserstreckungsrichtung des Rohres nicht ändert bzw. in anderen Worten konstant bleibt.

Besonders bevorzugte Formen erfindungsgemäßer Rohre sehen vor, dass die Rippen, in dem Querschnitt durch das Rohr orthogonal zu der Längserstreckungsrichtung des Rohres gesehen, eine dreieckige Grundform aufweisen. Der Begriff der Grundform sagt dabei aus, dass diese bevorzugten Ausführungen Rippen aufweisen, welche in einem Querschnitt orthogonal zur Längserstreckung des Rohres gesehen, eine generell dreieckige Form aufweisen. Günstigerweise liegen die Flanken des Dreiecks, d.h. die Seitenflanken der jeweiligen Rippe, jeweils zumindest bereichsweise in einer Ebene. Bei einer exakt dreieckigen Form der Rippen könnten die Seitenflanken vollständig in einer jeweiligen Ebene liegen. Gemäss der Erfindung sind die Ecken und Kanten des Dreiecks abgerundet. Besonders bevorzugte Varianten der Erfindung sehen in diesem Zusammenhang vor, dass, in dem Querschnitt durch das Rohr orthogonal zu der Längserstreckungsrichtung des Rohres gesehen, sich zwei in den Transporthohlraum hineinreichende Begrenzungslinien der dreieckigen Grundform der Rippe in einem Winkel von 60° bis 90°, vorzugsweise von 80° bis 88°, schneiden. Dies ist also bevorzugt der Winkel an der, gegebenenfalls abgerundeten, in den Transporthohlraum hineinreichenden Ecke dieser dreieckigen Grundform der Rippe. In einer alternativen Ausführungsform könnte vorgesehen sein, dass, in dem Querschnitt durch das Rohr orthogonal zu der Längserstreckungsrichtung des Rohres gesehen, sich die zwei in den Transporthohlraum hineinreichenden Begrenzungslinien der dreieckigen Grundform der Rippe in einem Winkel von 15° bis weniger als 60°, vorzugsweise von 20° bis 50°, schneiden.

Alternativ zur dreieckigen Grundform gibt es aber auch noch andere bevorzugte Varianten zur Ausgestaltungsform der Rippen. Z.B. kann vorgesehen sein, dass die Rippen und die Vertiefungen, in dem Querschnitt durch das Rohr orthogonal zu der Längserstreckungsrichtung des Rohres gesehen, eine wellenförmige, insbesondere sinusförmige, Grundform aufweisen.

Bevorzugte Varianten erfindungsgemäßer Rohre sehen vor, dass eine Rippenhöhe der Rippen gegenüber den jeweils benachbarten Vertiefungen einen Wert von 0,15 mm bis 1,5 mm, vorzugsweise 0,2 mm bis 0,4 mm, beträgt. In einer alternativen Ausführungsform kann vorgesehen sein, dass die Rippenhöhe der Rippen gegenüber den jeweils benachbarten Vertiefungen einen Wert von 0,02 mm bis weniger als 0,15 mm, vorzugsweise 0,075 mm bis weniger als 0,15 mm, beträgt. Insgesamt ist es denkbar und möglich, dass die Rippenhöhe der Rippen gegenüber den jeweils benachbarten Vertiefungen einen Wert von 0,02 mm bis 1,5 mm beträgt. Die Rippenhöhe bezeichnet dabei, wie weit das in den Transporthohlraum hineinreichende Maximum einer Rippe über das entsprechende Minimum einer jeweils benachbarten Vertiefung übersteht. Dieser Wert kann z.B. aus der Differenz des Radius der Innenoberfläche im Bereich des Maximums der Rippe und des Radius der den Transporthohlraum begrenzenden Innenoberfläche im Bereich des Minimums der Vertiefung berechnet werden.

Bei der Frage, wie weit zwei benachbarte Rippen günstigerweise voneinander in Umfangsrichtung entfernt sind, sehen bevorzugte Varianten der Erfindung vor, dass der Abstand zwischen, in den Transporthohlraum hineinragenden, Maxima zweier benachbarter Rippen einen Wert aufweist, welcher im Bereich des 0,5-Fachen bis 3-Fachen, vorzugsweise des 1,5-Fachen bis 2,5-Fachen, einer bzw. der Rippenhöhe der Rippen gegenüber der jeweils dazwischen angeordneten Vertiefung liegt. In einer alternativen Ausführungsvariante könnte vorgesehen sein, dass der Abstand zwischen den, in den Transporthohlraum hineinragenden, Maxima zweier benachbarter Rippen einen Wert aufweist, welcher im Bereich des mehr als 3-Fachen bis 5-Fachen einer bzw. der Rippenhöhe der Rippen gegenüber der jeweils dazwischen angeordneten Vertiefung liegt. Es könnte also insgesamt vorgesehen sein, dass der Abstand zwischen den, in den Transporthohlraum hineinragenden, Maxima zweier benachbarter Rippen einen Wert aufweist, welcher im Bereich des 0,5-Fachen bis 5-Fachen einer bzw. der Rippenhöhe der Rippen gegenüber der jeweils dazwischen angeordneten Vertiefung liegt. Das Maximum einer Rippe ist dabei wiederum die maximale Erhöhung der Rippe in Richtung in den Transporthohlraum hinein. Besonders bevorzugt ist jedenfalls vorgesehen, dass der besagte Abstand zwischen den Maxima zweier benachbarter Rippen größer als die Rippenhöhe der Rippen ist.

Wie bereits an der oben bezeichneten bevorzugten Formgebung für die Rippen zu erkennen ist, sehen bevorzugte Varianten der Erfindung vor, dass, in dem Querschnitt durch das Rohr orthogonal zu der Längserstreckungsrichtung des Rohres gesehen, die Rippen und/oder Vertiefungen eine zumindest bereichsweise abgerundete Außenkontur aufweisen.

Erfindungsgemäße Rohre bzw. deren Rohrwandungen können aus unterschiedlichen Materialien hergestellt werden. Es kann sich dabei um Monomaterial oder Verbundwerkstoffe handeln. Bei entsprechenden Druckbelastungen sind auch Faserverstärkungen oder andere an sich bekannte Maßnahmen zur Erhöhung der Druckfestigkeit denkbar. Besonders bevorzugt handelt es sich bei den erfindungsgemäßen Rohren um Kunststoffrohre, insbesondere mit und/oder aus Polyolefin. Als Polyolefin können bevorzugt Polyethylene wie z.B. PE80, PE100, PE100RC, PERT oder vernetzte Polyethylene wie PEX zum Einsatz kommen. Andere geeignete Polyolefine zur Herstellung erfindungsgemäßer Rohre sind z.B. aber auch Polypropylene und Polybuthylene. Es kann sich auch um thermisch verbesserte Polyolefine bzw. Kunststoffe handeln, z.B. indem man diesen Graphit zusetzt.

Abgesehen von den Kunststoffen ist es grundsätzlich aber auch möglich, erfindungsgemäße Rohre aus Metall oder zumindest mit Metallanteilen herzustellen. Geeignete Metalle sind z.B. Stahl, Edelstahl, Aluminium, Kupfer und dergleichen. Erfindungsgemäße Rohre können im Extrusionsverfahren ein- oder mehrschichtig, z.B. auch als Kunststoff-Metall-Verbundrohre oder auch als reine Kunststoffrohre hergestellt werden. Die die Rippen und Vertiefungen aufweisende Innenoberfläche kann durch ein entsprechendes Werkzeug bereits bei der Extrusion des Rohres hergestellt werden. Natürlich ist es auch denkbar, diese Innenoberfläche mit ihren Rippen und Vertiefungen erst in einem späteren Bearbeitungsschritt auszubilden oder zumindest zu bearbeiten.

Erfindungsgemäße Rohre können zum Transport von Flüssigkeiten, insbesondere von Wärmeträgerflüssigkeiten in Heizungen und Sanitäranlagen als Heizungs- und/oder Sanitärrohre verwendet werden. Hier können die Transporthohlräume entsprechender Rohre einen Durchmesser von z.B. 8mm (Millimeter) bis 90mm aufweisen. Erfindungsgemäße Rohre können aber auch als Trinkwasserversorgungsrohre z.B. mit einem Innendurchmesser, also Durchmesser des Transporthohlraums von 20mm bis 400mm ausgebildet sein. Wie bereits ausgeführt, kann es sich auch um profilförmige Rohre wie z.B. Rechteckrohre für den Transport von flüssigen Medien handeln. Mit erfindungsgemäßen Rohren können aber auch gasförmige Fluide transportiert werden. Es handelt sich dann z.B. um Gasrohre, Lüftungssystemrohre oder dergleichen. Besonders bevorzugt werden erfindungsgemäße Rohre aber in der Geothermie, also zur Gewinnung von Erdwärme, verwendet. In diesem Einsatzbereich können erfindungsgemäße Rohre z.B. als Teil von Sonden, Kollektoren und/oder aber auch als Anbindungsrohre verwendet werden bzw. diese vollständig ausbilden. Der Durchmesser des Transporthohlraums bzw. der Innendurchmesser der Rohre liegt in solchen Anwendungen bevorzugt wiederum im Bereich von 8mm bis 90mm.

Der Vollständigkeit halber wird darauf hingewiesen, dass der Innendurchmesser der Rohre, also der Durchmesser der Transporthohlräume zwischen den Minima zweier einander gegenüberliegender Vertiefungen der erfindungsgemäßen Rohre gemessen wird.

Wie bereits eingangs ausgeführt, sorgt die erfindungsgemäß strukturierte Innenoberfläche der Rohrwandung dafür, dass möglichst wenig turbulente Strömung beim Durchströmen des Transporthohlraums des Rohres entsteht bzw. erst bei höheren Volumenströmen einsetzt. Hierdurch wird der Widerstand bei gleicher Strömungsgeschwindigkeit des Fluides geringer. Besonders bevorzugt werden erfindungsgemäße Rohre bei Volumenströmen des sie durchströmenden Fluids im Bereich von 0,05 m³/h (Kubikmeter pro Stunde) bis 8,0 m³/h, vorzugsweise von 0,1 m³/h bis 5,0 m³/h eingesetzt. Ein erfindungsgemäßes Verfahren zum Transport von Fluiden, insbesondere Flüssigkeiten, in einem Transporthohlraum eines erfindungsgemäßen Rohres sieht dementsprechend bevorzugt auch vor, dass ein Volumenstrom des Fluides, vorzugsweise der Flüssigkeit, im Transporthohlraum von 0,05 m³/h bis 8,0 m³/h, vorzugsweise von 0,1 m³/h bis 5,0 m³/h, beträgt. Der Volumenstrom bezeichnet dabei das Volumen des den Transporthohlraum pro Zeiteinheit durchströmenden Fluides.

Weitere Merkmale und Einzelheiten der Erfindung werden nachfolgend beispielhaft anhand der in den Figuren gezeigten erfindungsgemäßen Ausführungsbeispiele erläutert. Es zeigen:
Fig. 1 einen Querschnitt orthogonal zur Längserstreckung des Rohres durch ein erfindungsgemäßes Rohr;
Fig. 2 einen Abschnitt eines in Längserstreckungsrichtung aufgeschnitten dargestellten, erfindungsgemäßen Rohres gemäß Fig. 1;
Fig. 3 bis 6 verschiedene Ausführungsbeispiele, wie die Rippen und Vertiefungen erfindungsgemäßer Rohre in bevorzugten Varianten ausgestaltet sein können.

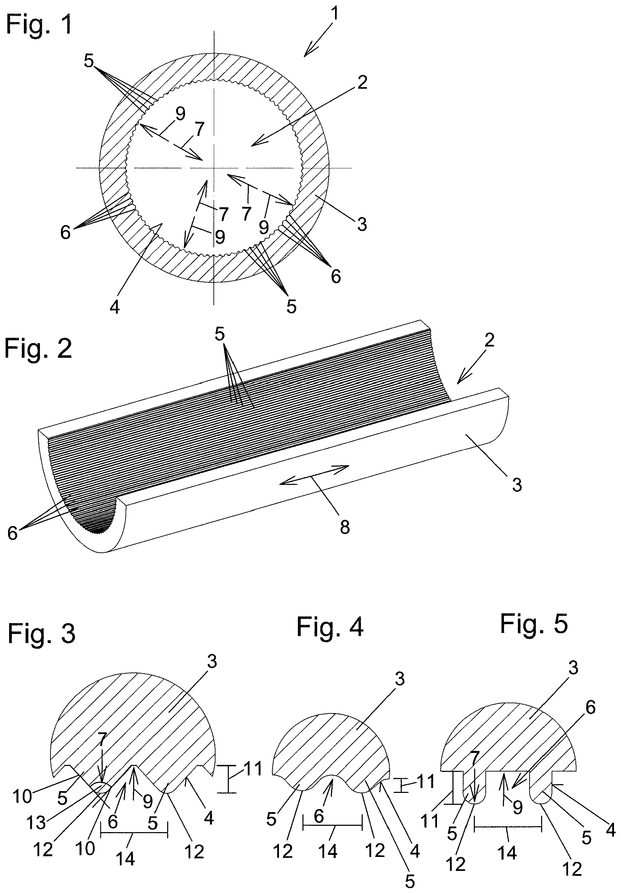

Fig. 1 zeigt einen Querschnitt durch ein erfindungsgemäßes Rohr 1 orthogonal zu seiner Längserstreckungsrichtung 8. Die Rohrwandung 3 umschließt den Transporthohlraum 2 des Rohres 1, durch welchen Fluide, also Gase und insbesondere auch Flüssigkeiten transportiert werden können. Die den Transporthohlraum 2 begrenzende Innenoberfläche 4 der Rohrwandung 3 weist eine Abfolge von voneinander beabstandeten Rippen 5 auf. Zwischen jeweils zwei benachbart zueinander angeordneten Rippen 5 befindet sich jeweils eine Vertiefung 6. Die Rippen 5 ragen weiter in den Transporthohlraum 2 hinein als die Vertiefungen 6. Erfindungsgemäß ist bei den Rippen 5 vorgesehen, dass sie, in besagtem Querschnitt gemäß Fig. 1 gesehen, in Richtung 7 in den Transporthohlraum 2 hinein zumindest bereichsweise verjüngt ausgebildet sind. Bevorzugt ist auch vorgesehen, dass die Vertiefungen 6, wiederum in besagtem Querschnitt gesehen, in Richtung 9 aus dem Transporthohlraum 2 heraus zumindest bereichsweise verjüngt ausgebildet sind. Die Richtungen 7 und 9 verlaufen, wie in Fig. 1 gut zu sehen ist, jeweils bevorzugt radial. Die Richtung 7 verläuft radial in Richtung zum Zentrum des Transporthohlraums 2 hin. Die Richtung 9 radial nach außen, also vom Zentrum des Transporthohlraums 2 weg.

In Fig. 2 ist das Rohr 1 aus Fig. 1 entlang seiner Längserstreckungsrichtung 8 aufgeschnitten dargestellt, um den hier realisierten, bevorzugten Verlauf der Rippen 5 und Vertiefungen 6 in bzw. parallel zur Längserstreckungsrichtung 8 darzustellen. Es ist gut zu erkennen, dass sowohl die Rippen 5 als auch die Vertiefungen 6 selbst jeweils längserstreckt sind. Die jeweilige Richtung der Längserstreckung der Rippen 5 und der Vertiefungen 6 liegt, günstigerweise exakt, parallel zur Längserstreckungsrichtung 8 des Rohres 1 bzw. der Rohrwandung 3. Diese Längserstreckungsrichtung 8 entspricht auch den möglichen Transportrichtungen, in denen Fluide durch das Rohr 1 hindurch bzw. dessen Transporthohlraum 2 hindurch transportiert werden.

Fig. 3 zeigt eine erste bevorzugte Ausgestaltungsform der Rippen 5 und der Vertiefungen 6 in einem vergrößerten Ausschnitt aus der Querschnittsdarstellung gemäß Fig. 1. In dieser ersten Ausführungsvariante gemäß Fig. 3 haben die Rippen 5, in dem besagten Querschnitt durch das Rohr 1 orthogonal zu der Längserstreckungsrichtung 8 des Rohres gesehen, eine dreieckige Grundform. Wie bereits eingangs ausgeführt, bedeutet dies nicht, dass die Rippen 5 in dem genannten Querschnitt exakt dreiecksförmig ausgeformt sind. Sie haben hier vielmehr abgerundete Maxima 12 wie dies in Fig. 3 auch gut zu sehen ist.

Die Rippenhöhe 11 der Rippen 5 gegenüber den jeweils benachbarten Vertiefungen 6 liegt, wie eingangs bereits erläutert, günstigerweise in einem Bereich von 0,15 mm bis 1,5 mm, vorzugsweise von 0,2 mm bis 0,4 mm. Im gezeigten Ausführungsbeispiel handelt es sich exakt um 0,25 mm. In einer anderen Ausführungsform gemäß der Erfindung könnte die Rippenhöhe in einem Bereich von 0,02 mm bis weniger als 0,15 mm, insbesondere von 0,075 mm bis weniger als 0,15 mm, liegen. Der Abstand 14 zwischen den in den Transporthohlraum 2 hineinreichenden Maxima 12 zweier benachbarter Rippen 5 beträgt günstigerweise einen Wert, welcher im Bereich zwischen dem 0,5- und dem 3-Fachen, vorzugsweise zwischen dem 1,5- und dem 2,5-Fachen, der Rippenhöhe 11 der Rippen 5 liegt. In einer weiteren erfindungsgemäßen Variante könnte der Abstand 14 auch einen Wert in einem Bereich von mehr als dem 3-Fachen und höchstens dem 5-Fachen der Rippenhöhe 11 der Rippen 5 betragen.

Die die dreieckige Grundform der Rippe 5 begrenzenden und in den Transporthohlraum 2 hineinreichenden Begrenzungslinien 10 schneiden sich in der in Fig. 3 gezeigten Ausführungsform im Winkel 13, welcher bevorzugt 60° bis 90°, besonders bevorzugt 80° bis 88°, beträgt. Die die dreieckige Grundform der Rippe 5 begrenzenden und in den Transporthohlraum 2 hineinreichenden Begrenzungslinien 10 könnten sich in einer anderen erfindungsgemäßen Ausgestaltungsform in einem Winkel 13 schneiden, welcher in einem Bereich von 15° bis weniger als 60°, insbesondere von 20° bis 50°, liegt.

Die Abrundungen der Maxima 12 der Rippen 5 können günstigerweise einen Radius von z.B. 0,1 mm aufweisen. Die abgeflachten Bereiche um die Minima der Vertiefungen 6 haben im gezeigten Ausführungsbeispiel eine Breite von 0,05 mm.

Fig. 4 zeigt eine erfindungsgemäße Alternative zur Ausgestaltung der Form der Rippen 5 und der Vertiefungen 6. In diesem Ausführungsbeispiel weisen die Rippen 5 und die Vertiefungen 6, in dem Querschnitt durch das Rohr 1 orthogonal zur Längserstreckungsrichtung des Rohres gesehen, eine wellenförmige, hier insbesondere sinusförmige, Grundform auf. Die Rippenhöhe 11 und auch der Abstand 14 zwischen zwei Maxima 12 benachbarter Rippen 5 liegt günstigerweise jeweils im selben Wertebereich wie bei dem Ausführungsbeispiel gemäß Fig. 3.

Fig. 5 zeigt noch beispielhaft eine weitere Variante, die nicht zur Erfindung gemäss Anspruch 1 gehört, weil die Vertiefungen nicht abgerundet sind, wie die Rippen 5 ausgeformt sein können, um in Richtung 7 in den Transporthohlraum 2 hinein im besagten Querschnitt gesehen, zumindest bereichsweise verjüngt ausgebildet zu sein. In der Variante gemäß Fig. 5 sind nur die Bereiche um die Maxima 12 der Rippen 5 herum verjüngt ausgebildet. Die Breite der Rippen gemäß Fig. 5 parallel zum Abstand 14 gemessen, liegt günstigerweise im Bereich zwischen 0,3 mm und 1,3 mm, vorzugsweise bei 0,6 mm. Alternativ könnte die Breite der Rippen, parallel zum Abstand 14 gemessen, im Bereich von 0,05 mm bis 0,3 mm liegen. Es wäre also auch denkbar und möglich, dass die Breite der Rippen, parallel zum Abstand 14 gemessen, insgesamt einen Wert im Bereich von 0,05 mm und weniger als 1,3 mm beträgt. Die oberen Kanten im Bereich der Maxima dieser Rippen 5 sind günstigerweise mit einem Radius von 0,1 mm bis 0,65 mm abgerundet. Für die Rippenhöhe 11 und den Abstand 14 gilt günstigerweise das zu den anderen Ausführungsbeispielen bereits Gesagte.

Der Vollständigkeit halber wird noch einmal darauf hingewiesen, dass erfindungsgemäße Rippen 5 natürlich auch anders ausgeformt sein können. Versuche zeigen jedenfalls, dass durch die erfindungsgemäßen Maßnahmen die Reibung der Fluide an der Innenoberfläche 4 der Rohrwandung um 10% und mehr verringert werden kann. Hierdurch können markante Reduzierungen der Druckverluste gegenüber technisch glatten Rohren erreicht werden.

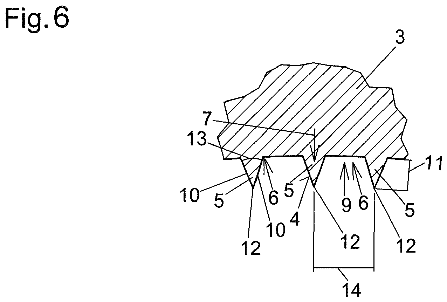

Fig. 6 zeigt eine weitere Variante, die nicht zur Erfindung gemäss Anspruch 1 gehört, weil die Rippen und Vertiefungen nicht abgerundet sind, zur Ausgestaltung der Form der Rippen 5 und der Vertiefungen 6. In dieser Variante weisen die Rippen 5, in dem Querschnitt durch das Rohr 1 orthogonal zur Längserstreckungsrichtung 8 des Rohres 1 gesehen, eine dreieckige Grundform ähnlich dem ersten Ausführungsbeispiel auf. Die Maxima 12 sind in dieser Ausführungsform spitz ausgeformt, d.h. dass die Rippen 5, in Richtung 7 in den Transporthohlraum 2 hinein, scharfkantig ausgebildet sind. Die Flanken des jeweiligen Dreiecks, d.h. die Seitenflanken der jeweiligen Rippe 5, fallen mit den Begrenzungslinien 10 zusammen. D.h. die Seitenflanken der jeweiligen Rippe 5 liegen jeweils in einer Ebene. Die die dreieckige Grundform der Rippe 5 begrenzenden und in den Transporthohlraum 2 hineinreichenden Begrenzungslinien 10, d.h. die Seitenflanken der Rippen 5, schneiden sich im Winkel 13, welcher im Ausführungsbeispiel 40° beträgt.

Der Begriff "spitz" im Zusammenhang mit der Rippe 5 bedeutet im Rahmen dieser Schrift, dass der Radius einer Abrundung der Maxima 12 kleiner ist als 0,1mm. In anderen Worten werden Rippen 5 mit abgerundeten Maxima 12, deren Abrundungsradius weniger als 0,1mm beträgt, als "spitz" bezeichnet.

Hinsichtlich der Breite der Rippen 5 und der Rippenhöhe 11, sowie dem Abstand 14 gilt günstigerweise das zu den anderen Ausführungsbeispielen bereits Gesagte.

Das in den Ausführungsbeispielen gezeigte Rohr (1) könnte beispielsweise ein Rohr, insbesondere Heizungsrohr, für eine Heizung und/oder ein Rohr, insbesondere Sanitärrohr, für eine Sanitäranlage und/oder ein Rohr, insbesondere Geothermierohr, für eine Geothermieanlage und/oder ein Rohr, insbesondere Trinkwasserrohr, für eine Trinkwasserversorgung sein.

### Legende

### zu den Hinweisziffern:

- 1: Rohr
- 2: Transporthohlraum
- 3: Rohrwandung
- 4: Innenoberfläche
- 5: Rippen
- 6: Vertiefung
- 7: Richtung
- 8: Längserstreckungsrichtung
- 9: Richtung
- 10: Begrenzungslinie
- 11: Rippenhöhe
- 12: Maxima
- 13: Winkel
- 14: Abstand

## Patentansprüche

1. Rohr (1) zum Transport von Fluiden, insbesondere Flüssigkeiten, in einem Transporthohlraum (2) des Rohres (1), welcher von einer Rohrwandung (3) des Rohres (1) umgeben ist, wobei die Rohrwandung (3) an ihrer den Transporthohlraum (2) begrenzenden Innenoberfläche (4) eine Abfolge von voneinander beabstandeten Rippen (5) aufweist, wobei zwischen zwei benachbart zueinander angeordneten Rippen (5) jeweils eine Vertiefung (6) angeordnet ist und die Rippen (5) weiter in den Transporthohlraum (2) hineinragen als die Vertiefungen (6), wobei die Rippen (5) in Richtung (7) in den Transporthohlraum (2) hinein, in einem Querschnitt durch das Rohr (1) orthogonal zu einer Längserstreckungsrichtung (8) des Rohres (1) gesehen, zumindest bereichsweise verjüngt ausgebildet sind, **dadurch gekennzeichnet, dass**, in dem Querschnitt durch das Rohr (1) orthogonal zu der Längserstreckungsrichtung (8) des Rohres (1) gesehen, die Rippen (5) und Vertiefungen (6) eine zumindest bereichsweise abgerundete Außenkontur aufweisen.

2. Rohr (1) nach Anspruch 1, **dadurch gekennzeichnet, dass** die Vertiefungen (6) in Richtung (9) aus dem Transporthohlraum (2) heraus, in dem Querschnitt durch das Rohr (1) orthogonal zu der Längserstreckungsrichtung (8) des Rohres (1) gesehen, zumindest bereichsweise verjüngt ausgebildet sind.

3. Rohr (1) nach Anspruch 1 oder 2, **dadurch gekennzeichnet, dass** die Rippen (5) und Vertiefungen (6), vorzugsweise vollständig, in der Längserstreckungsrichtung (8) des Rohres (1) ausgerichtet sind.

4. Rohr (1) nach einem der Ansprüche 1 bis 3, **dadurch gekennzeichnet, dass** die Rippen (5), in dem Querschnitt durch das Rohr (1) orthogonal zu der Längserstreckungsrichtung (8) des Rohres (1) gesehen, eine dreieckige Grundform aufweisen.

5. Rohr (1) nach Anspruch 4, **dadurch gekennzeichnet, dass**, in dem Querschnitt durch das Rohr (1) orthogonal zu der Längserstreckungsrichtung (8) des Rohres (1) gesehen, sich zwei in den Transporthohlraum (2) hineinreichende Begrenzungslinien (10) der dreieckigen Grundform der Rippe (5) in einem Winkel (13) von 15° bis weniger als 60°, vorzugsweise von 20° bis 50°, schneiden.

6. Rohr (1) nach einem der Ansprüche 1 bis 3, **dadurch gekennzeichnet, dass** die Rippen (5) und die Vertiefungen (6), in dem Querschnitt durch das Rohr (1) orthogonal zu der Längserstreckungsrichtung (8) des Rohres (1) gesehen, eine wellenförmige, insbesondere sinusförmige, Grundform aufweisen.

7. Rohr (1) nach einem der Ansprüche 1 bis 6, **dadurch gekennzeichnet, dass** eine Rippenhöhe (11) der Rippen (5) gegenüber den jeweils benachbarten Vertiefungen (6) einen Wert von 0,15 mm bis 1,5 mm, vorzugsweise 0,2 mm bis 0,4 mm, oder einen Wert von 0,02 mm bis weniger als 0,15 mm, vorzugsweise 0,075 mm bis weniger als 0,15 mm, beträgt.

8. Rohr (1) nach einem der Ansprüche 1 bis 7, **dadurch gekennzeichnet, dass** der Abstand (14) zwischen, in den Transporthohlraum (2) hineinragenden, Maxima (12) zweier benachbarter Rippen (5) einen Wert aufweist, welcher im Bereich des 0,5-Fachen bis 3-Fachen, vorzugsweise des 1,5-Fachen bis 2,5-Fachen, oder im Bereich von mehr als dem 3-Fachen bis 5-Fachen, einer bzw. der Rippenhöhe (11) der Rippen (5) gegenüber der jeweils dazwischen angeordneten Vertiefung (6) liegt.

9. Rohr (1), nach einem der Ansprüche 1 bis 8, **dadurch gekennzeichnet, dass** das Rohr (1) ein Rohr für eine Heizung und/oder für eine Sanitäranlage und/oder für eine Geothermieanlage und/oder für eine Trinkwasserversorgung ist.

10. Verfahren zum Transport von Fluiden, insbesondere Flüssigkeiten, in einem Transporthohlraum (2) eines Rohres (1) nach einem der Ansprüche 1 bis 9, **dadurch gekennzeichnet, dass** ein Volumenstrom des Fluides, vorzugsweise der Flüssigkeit, im Transporthohlraum (2) von 0,05 m³/h bis 8,0 m³/h, vorzugsweise von 0,1 m³/h bis 5,0 m³/h, beträgt.

## Claims

1. Pipe (1) for conveying fluids, and in particular liquids, in a hollow conveying space (2) in the pipe (1) which is surrounded by a wall (3) of the pipe (1), the pipe wall (3) having, on its inner surface (4) which defines the hollow conveying space (2), a succession of ribs (5) spaced apart from one another, a depression (6) being arranged between any two ribs (5) which are arranged adjacent to one another and the ribs (5) projecting further into the hollow conveying space (2) than the depressions (6), the ribs (5), when seen in a cross-section through the pipe (1) taken orthogonally to a direction of longitudinal extent (8) of the pipe (1), being of a form which, at least in a region or regions, narrows in a direction (7) pointing into the hollow conveying space (2), **characterised in that**, when seen in the cross-section through the pipe (1) taken orthogonally to the direction of longitudinal extent (8) of the pipe (1), the ribs (5) and depressions (6) have an external contour which, at least in a region or regions, is rounded.

2. Pipe (1) according to claim 1, **characterised in that**, when seen in the cross-section through the pipe (1) taken orthogonally to the direction of longitudinal extent (8) of the pipe (1), the depressions (6) are of a form which narrows, at least in a region or regions, in a direction (9) pointing out of the hollow conveying space (2) .

3. Pipe (1) according to claim 1 or 2, **characterised in that** the ribs (5) and depressions (6) are aligned, preferably entirely, in the direction of longitudinal extent (8) of the pipe (1).

4. Pipe (1) according to one of claims 1 to 3, **characterised in that**, when seen in the cross-section through the pipe (1) taken orthogonally to the direction of longitudinal extent (8) of the pipe (1), the ribs (5) are of a triangular basic shape.

5. Pipe (1) according to claim 4, **characterised in that**, when seen in the cross-section through the pipe (1) taken orthogonally to the direction of longitudinal extent (8) of the pipe (1), two lines (10) which extend into the hollow conveying space (2) and which define the triangular basic shape of the rib (5) intersect at an angle (13) of 15° to less than 60°, and preferably of 20° to 50°.

6. Pipe (1) according to one of claims 1 to 3, **characterised in that**, when seen in the cross-section through the pipe (1) taken orthogonally to the direction of longitudinal extent (8) of the pipe (1), the ribs (5) and the depressions (6), are of an undulating, and in particular sinusoidal, basic shape.

7. Pipe (1) according to one of claims 1 to 6, **characterised in that** a height (11) of the ribs (5) relative to their respective adjoining depressions (6) is a figure of 0.15 mm to 1.5 mm, and preferably 0.2 mm to 0.4 mm, or a figure of 0.02 mm to less than 0.15 mm, and preferably 0.075 mm to less than 0.15 mm.

8. Pipe (1) according to one of claims 1 to 7, **characterised in that** the distance (14) between maxima (12) projecting into the hollow conveying space (2) of two adjacent ribs (5) is an amount which lies within the range of 0.5 times to 3 times, and preferably 1.5 times to 2.5 times, or within the range of more than 3 times to 5 times, a height or the height (11) of the ribs (5) relative to the respective depressions (6) arranged between them.

9. Pipe (1), according to one of claims 1 to 8, **characterised in that** the pipe (1) is a pipe for a heating system and/or for a sanitation system and/or for a geothermal system and/or for a supply of drinking water.

10. Method of conveying fluids, and in particular liquids, in a hollow conveying space (2) in a pipe (1) according to one of claims 1 to 9, **characterised in that** a volumetric flowrate of the fluid, and preferably of the liquid, in the hollow conveying space (2) is from 0.05 m³/h to 8.0 m³/h, and preferably from 0.1 m³/h to 5.0 m³/h.

## Revendications

1. Tube (1) pour le transport de fluides, en particulier de liquides, dans une cavité de transport (2) du tube (1) qui est entourée par une paroi de tube (3) du tube (1), la paroi de tube (3) présentant sur sa surface intérieure (4) délimitant la cavité de transport (2) une suite de nervures (5) espacées les unes des autres, un creux (6) étant disposé entre deux nervures (5) disposées adjacentes, et les nervures (5) saillant plus loin dans la cavité de transport (2) que les creux (6), les nervures (5), vues en coupe transversale à travers le tube (1) perpendiculairement à une direction d'extension longitudinale (8) du tube (1), se rétrécissent au moins par zones dans la direction (7) allant vers la cavité de transport (2), **caractérisé en ce que** les nervures (5) et les creux (6), vus en coupe transversale à travers le tube (1) perpendiculairement à la direction d'extension longitudinale (8) du tube (1), présentent un contour extérieur arrondi au moins par zones.

2. Tube (1) selon la revendication 1, **caractérisé en ce que** les creux (6), vus dans la section transversale à travers le tube (1) perpendiculairement à la direction d'extension longitudinale (8) du tube (1), se rétrécissent au moins par zones dans la direction (9) s'éloignant de la cavité de transport (2).

3. Tube (1) selon la revendication 1 ou 2, **caractérisé en ce que** les nervures (5) et les creux (6) sont alignés, de préférence complètement, dans la direction d'extension longitudinale (8) du tube (1).

4. Tube (1) selon l'une des revendications 1 à 3, **caractérisé en ce que** les nervures (5), vues en coupe transversale à travers le tube (1) perpendiculairement à la direction d'extension longitudinale (8) du tube (1), ont une forme de base triangulaire.

5. Tube (1) selon la revendication 4, **caractérisé en ce que**, vu en coupe transversale à travers le tube (1) perpendiculairement à la direction d'extension longitudinale (8) du tube (1), deux lignes de délimitation (10) de la forme de base triangulaire de la nervure (5) s'étendant dans la cavité de transport (2) se coupent selon un angle (13) compris entre 15° et moins de 60°, de préférence entre 20° et 50°.

6. Tube (1) selon l'une des revendications 1 à 3, **caractérisé en ce que** les nervures (5) et les creux (6), vus en coupe transversale à travers le tube (1) perpendiculairement à la direction d'extension longitudinale (8) du tube (1), présentent une forme de base ondulée, en particulier sinusoïdale.

7. Tube (1) selon l'une des revendications 1 à 6, **caractérisé en ce qu'**une hauteur de nervure (11) des nervures (5) par rapport aux creux adjacents correspondants (6) a une valeur comprise entre 0,15 mm et 1,5 mm, de préférence entre 0,2 mm et 0,4 mm, ou une valeur comprise entre 0,02 mm et moins de 0,15 mm, de préférence entre 0,075 mm et moins de 0,15 mm.

8. Tube (1) selon l'une des revendications 1 à 7, **caractérisé en ce que** la distance (14) entre les maximas (12) de deux nervures adjacentes (5) saillant dans la cavité de transport (2) a une valeur qui est comprise dans la fourchette allant de 0,5 à 3 fois une ou des hauteurs (11) des nervures (5) par rapport au creux (6) correspondant situé entre celles-ci, de préférence allant de 1,5 à 2,5 fois cette ou ces hauteurs, ou dans la fourchette allant de plus de 3 à 5 fois cette ou ces hauteurs.

9. Tube (1), selon l'une des revendications 1 à 8, **caractérisé en ce que** le tube (1) est un tube pour un chauffage et/ou pour une installation sanitaire et/ou pour une installation géothermique et/ou pour une alimentation en eau potable.

10. Procédé de transport de fluides, en particulier de liquides, dans une cavité de transport (2) d'un tube (1) selon l'une des revendications 1 à 9, **caractérisé en ce qu'**un débit volumique du fluide, de préférence du liquide, dans la cavité de transport (2) est compris entre 0,05 m³/h et 8,0 m³/h, de préférence entre 0,1 m³/h et 5,0 m³/h.
